# EUROPEAN PATENT APPLICATION

(11) **EP 3 680 706 A1**
(43) Date of publication of application: **15.07.2020**
(21) Application number: 17923843.1
(22) Date of filing: 01.11.2017
(51) Int. Cl.: G02F 1/1333

(54) **LIQUID CRYSTAL DISPLAY ASSEMBLY**

(30) Priority: 04.09.2017 CN 201710784694
(71) Applicant: Shenzhen China Star Optoelectronics Technology Co., Ltd., Shenzhen, Guangdong 518132 (CN)
(72) Inventor: CHEN, Lixuan, Shenzhen Guangdong 518132 (CN)
(74) Representative: Keil & Schaafhausen Patentanwälte PartGmbB
(86) International application number: PCT/CN2017/108857
(87) International publication number: WO 2019/041530

(57) **Abstract**

Provided is a liquid crystal display assembly, comprising: an array substrate (20); a color filter substrate (30); a first sealant (40); a liquid crystal layer (50); a polarizer (60); and a second sealant (70). The liquid crystal layer (50) and the first sealant (40) are provided between the array substrate (20) and the color filter substrate (30). The first sealant (40) is provided around the liquid crystal layer (50). The polarizer (60) is provided above the color filter substrate (30). The second sealant (70) is provided around the polarizer (60), such that less moisture and dust enter the liquid crystal display assembly, thereby protecting the liquid crystal display assembly against contamination and corrosion.

## Description

### TECHNICAL FIELD

The present disclosure relates to a liquid crystal display, and more particularly to a liquid crystal display assembly.

### BACKGROUND OF DISCLOSURE

A liquid crystal display device usually has a liquid crystal display assembly and a driver. The liquid crystal display assembly usually includes two glass substrates, a liquid crystal layer, and a polarizing plate, all of which are laminated, wherein the polarizing plate is a laminated structure including a polarizing film. However, in conventional technologies, side surfaces of the two glass substrates, the liquid crystal layer, and the polarizing plate are exposed externally, resulting in water vapor, dust, etc., easily entering the two glass substrates, the liquid crystal layer, and the polarizing plate. Simultaneously, due to water vapor, dust, etc., entering inside the laminated structure from the side surface of the polarizing plate, the liquid crystal display assembly is contaminated and corroded seriously.

### SUMMARY OF THE DISCLOSURE

### TECHNICAL PROBLEMS

An embodiment of the present disclosure provides a liquid crystal display assembly to protect the liquid crystal display assembly from contamination and corrosion.

### SOLUTIONS OF PROBLEMS

### TECHNICAL SOLUTIONS

Based on the above object, an embodiment of the present disclosure provides a liquid crystal display assembly including:
an array substrate including a display area and a non-display area, wherein the non-display area surrounds the display area;
a color filter substrate;
a liquid crystal layer disposed between the array substrate and the color filter substrate;
a first sealant disposed between the array substrate and the color filter substrate, wherein the first sealant surrounds the liquid crystal layer;
a polarizing plate disposed on the color filter substrate; and
a second sealant surrounding the polarizing plate;
wherein the second sealant surrounds the first sealant, the color filter substrate, and the polarizing plate; and wherein a height of the second sealant is equal to a sum of thicknesses of the first sealant, the color filter substrate, and the polarizing plate.

In the liquid crystal display assembly provided by an embodiment of the present disclosure, the polarizing plate includes a laminated structure including a first substrate layer, a polarizing film layer, a second substrate layer, and a protective layer, all of which are stacked in sequence.

In the liquid crystal display assembly provided by an embodiment of the present disclosure, the polarizing plate further includes a quantum dot layer including a number of quantum dots.

In the liquid crystal display assembly provided by an embodiment of the present disclosure, the quantum dot layer is disposed between the polarizing film layer and the second substrate layer.

In the liquid crystal display assembly provided by an embodiment of the present disclosure, the liquid crystal display assembly further includes another polarizing plate disposed on an outer side of the array substrate.

Based on the above object, an embodiment of the present disclosure further provides a liquid crystal display assembly including:
a color filter substrate;
a liquid crystal layer disposed between the array substrate and the color filter substrate;
a first sealant disposed between the array substrate and the color filter substrate, wherein the first sealant surrounds the liquid crystal layer;
a polarizing plate disposed on the color filter substrate; and
a second sealant surrounding the polarizing plate.

In the liquid crystal display assembly provided by an embodiment of the present disclosure, the second sealant surrounds the first sealant, the color filter substrate, and the polarizing plate.

In the liquid crystal display assembly provided by an embodiment of the present disclosure, a height of the second sealant is equal to a sum of thicknesses of the first sealant, the color filter substrate, and the polarizing plate.

In the liquid crystal display assembly provided by an embodiment of the present disclosure, the liquid crystal display assembly includes an array substrate, a color filter substrate, a first sealant, a liquid crystal layer, a polarizing plate, and a second sealant. The polarizing plate includes a laminated structure including a first substrate layer, a polarizing film layer, a second substrate layer, and a protective layer, all of which are stacked in sequence.

In the liquid crystal display assembly provided by an embodiment of the present disclosure, the polarizing plate further includes a quantum dot layer including a number of quantum dots.

In the liquid crystal display assembly provided by an embodiment of the present disclosure, the quantum dot layer is disposed between the polarizing film layer and the second substrate layer.

In the liquid crystal display assembly provided by an embodiment of the present disclosure, the quantum dots includes at least one of red quantum dot, green quantum dot, and blue quantum dot.

In the liquid crystal display assembly provided by an embodiment of the present disclosure, the liquid crystal display assembly can further include another polarizing plate disposed on an outer side of the array substrate.

A method of fabricating a liquid crystal display assembly, including steps of:
providing an array substrate;
disposing a liquid crystal layer on the array substrate;
disposing a first sealant around the liquid crystal layer;
providing a color filter substrate covering the liquid crystal layer and the first sealant;
providing a polarizing plate disposed on the color filter substrate; and
disposing a second sealant around the polarizing plate.

In the method of fabricating the liquid crystal display assembly provided by the present disclosure, the second sealant surrounds the first sealant, the color filter substrate, and the polarizing plate.

In the method of fabricating the liquid crystal display assembly provided by the present disclosure, a height of the second sealant is equal to a sum of thicknesses of the first sealant, the color filter substrate, and the polarizing plate.

In the method of fabricating the liquid crystal display assembly provided by the present disclosure, the polarizing plate includes a laminated structure including a first substrate layer, a polarizing film layer, a second substrate layer, and a protective layer, all of which are stacked in sequence.

In the method of fabricating the liquid crystal display assembly provided by the present disclosure, the polarizing plate further includes a quantum dot layer including a number of quantum dots.

In the method of fabricating the liquid crystal display assembly provided by the present disclosure, the quantum dot layer is disposed between the polarizing film layer and the second substrate layer.

In the method of fabricating the liquid crystal display assembly provided by the present disclosure, the liquid crystal display assembly further includes another polarizing plate disposed on an outer side of the array substrate.

### BENEFICIAL EFFECTS OF DISCLOSURE

### BENEFICIAL EFFECTS

In the liquid crystal display assembly provided by the present disclosure, the liquid crystal layer and the first sealant are disposed between the array substrate and the color filter substrate, the first sealant surrounds the liquid crystal layer, the polarizing plate is disposed on the color filter substrate, and the second sealant surrounds the polarizing plate. Therefore, the liquid crystal display assembly is protected from contamination and corrosion by reducing water vapor, dust, etc., entering the liquid crystal display assembly.

### BRIEF DESCRIPTION OF DRAWINGS

### DESCRIPTION OF DRAWINGS

In order to illustrate technical solutions of embodiments of the present disclosure more clearly, the drawings required to be used in embodiments below are introduced easily. Obviously, the drawings described below are merely some embodiments of the present disclosure. As for those ordinarily skilled in the art, other figures can be obtained based on these drawings under the premise without creative efforts.
Fig. 1 is a cross-sectional diagram of a liquid crystal display assembly provided by an embodiment of the present disclosure.
Fig. 2 is a top view of an array substrate of a liquid crystal display assembly provided by an embodiment of the present disclosure.
Fig. 3 is a cross-sectional diagram of an array substrate of a liquid crystal display assembly provided by an embodiment of the present disclosure.
Fig. 4 is a cross-sectional diagram of a polarizing plate of a liquid crystal display assembly provided by an embodiment of the present disclosure.
Fig. 5 is a cross-sectional diagram of another liquid crystal display assembly provided by an embodiment of the present disclosure.

The main components corresponding to the descriptions.

| | |
|---|---|
| liquid crystal display assembly | 10 |
| array substrate | 20 |
| upper surface | 21 |
| display area | 211 |
| non-display area | 212 |
| color filter substrate | 30 |
| top surface | 31 |
| bottom surface | 32 |
| first side surface | 33 |
| first sealant | 40 |
| first inner wall | 40a |
| first outer wall | 40b |
| receiving portion | 41 |
| liquid crystal layer | 50 |
| polarizing plate | 60 |
| second top surface | 61 |
| second bottom surface | 62 |
| second side surface | 63 |
| laminated structure | 600 |
| first substrate layer | 601 |
| polarizing film layer | 602 |
| second substrate layer | 603 |
| protective layer | 604 |
| quantum dot layer | 605 |
| quantum dot | 605a |
| second sealant | 70 |
| second inner wall | 70a |
| second outer wall | 70b |
| height | H |
| thickness | D1, D2, D3 |

### BEST EMBODIMENT FOR CARRYING OUT DISCLOSURE

### BEST EMBODIMENT OF DISCLOSURE

An embodiment of the present disclosure provides a liquid crystal display assembly 10.

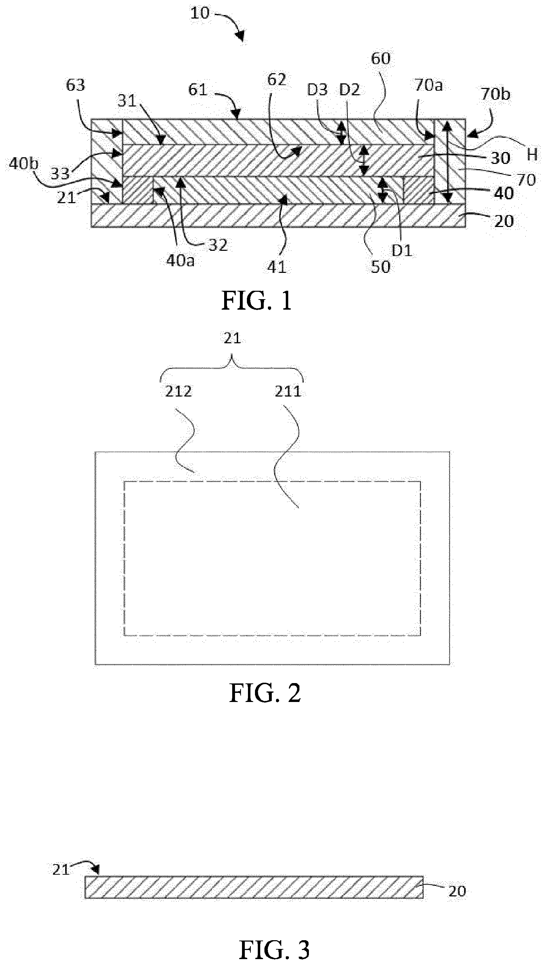

Please refer to Figs. 1 to 3, the liquid crystal display assembly 10 includes an array substrate 20, a color filter substrate 30, a first sealant 40, a liquid crystal layer 50, a polarizing plate 60, and a second sealant 70.

A display area 211 and a non-display area 212 are disposed on an upper surface 21 of the array substrate 20. The non-display area 212 surrounds the display area 211.

The color filter substrate 30 has a first top surface 31, a first bottom surface 32, and a first side surface 33. The first top surface 31 faces the first bottom surface 32. The first bottom surface 32 faces the upper surface 21 of the array substrate 20. The first side surface 33 is connected with and located between the first top surface 31 and the first bottom surface 32.

The liquid crystal layer 50 is disposed between the array substrate 20 and the color filter substrate 30. The first sealant 40 surrounds the liquid crystal layer 50. The first sealant 40 is disposed between the array substrate 20 and the color filter substrate 30. The first sealant 40 is located at the non-display area 212. The first sealant 40 surrounds the display area 211 to form a liquid crystal receiving portion 41. The first sealant 40 has a first inner wall 40a and a first outer wall 40b. The first inner wall 40a faces the liquid crystal receiving portion 41. The first outer wall 40b faces away the liquid crystal receiving portion 41. The liquid crystal receiving portion 41 is filled with the liquid crystal layer 50.

In some embodiments, the first sealant 40 can be made of a transparent material. In some embodiments, the first sealant 40 can be made of a thermosetting material. In some embodiments, the first sealant 40 can be made of a photocurable material.

The polarizing plate 60 is disposed on a first top surface 31 of the color filter substrate 30. The polarizing plate 60 has a second top surface 61, a second bottom surface 62, and a second side surface 63. The second top surface 61 faces the second bottom surface 62. The second side surface 63 is connected with and located between the second top surface 61 and the second bottom surface 62. The second bottom 62 fits to the first top surface 31 of the color filter substrate 30.

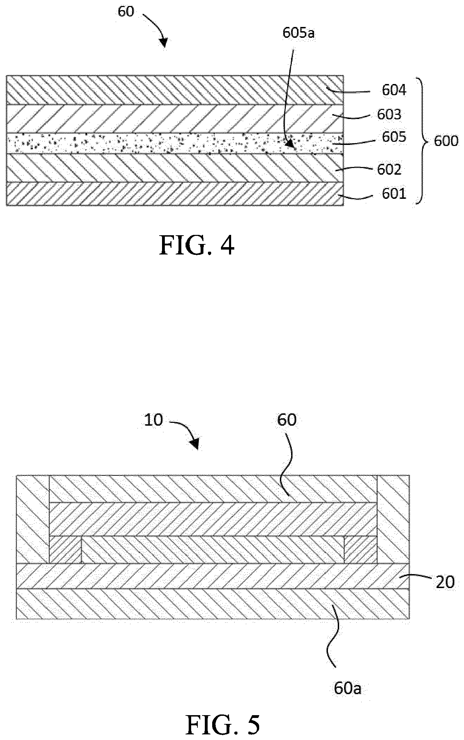

Please refer to Fig. 4, in some embodiments, the polarizing plate 60 can include a laminated structure 600. The laminated structure 600 includes a first substrate layer 601, a polarizing film layer 602, a second substrate layer 603, and a protective layer 604, all of which are stacked in sequence. In some embodiments, the first substrate layer 601 is neighboring the color filter substrate 30, and the protective layer 604 is away from the color filter substrate 30.

In some embodiments, the first substrate layer 601 and the second substrate layer 603 can be made of triacetylcellulose (TAC). In some embodiments, the polarizing film layer 602 can be made of polyvinyl alcohol (PVA). In some embodiments, the protective layer 604 can be made of polyethyleneterephthalate (PET).

In some embodiments, the polarizing plate further includes a quantum dot layer 605. The quantum dot layer 605 includes a number of quantum dots 605a. The quantum dot layer 605 can be disposed between the polarizing film layer 602 and the second substrate layer 603. The quantum dots 605a include at least one of red quantum dot, green quantum dot, and blue quantum dot.

The second sealant 70 surrounds the polarizing plate 60. The second sealant 70 is disposed on the non-display area of the array substrate 20. The second sealant 70 surrounds the first sealant 40, the color filter substrate 30, and the polarizing plate 60. The second sealant 70 has a second inner wall 70a and a second outer wall 70b. The second inner wall 70a faces the first sealant 40, the color filter substrate 30, and the polarizing plate 60. The second sealant 70 fits to the first outer wall 40b of the first sealant 40, a first surface 33 of the color filter substrate 30, and a second side surface 63 of the polarizing plate 60.

In some embodiments, the second sealant 70 can surround the first sealant 40, the color filter substrate 30, and the polarizing plate 60. A height H of the second sealant 70 is equal to a sum of a thickness D1 of the first sealant 40, a thickness D2 of the color filter substrate 30, and a thickness D3 of the polarizing plate 60.

In some embodiments, the second sealant 70 can be made of a transparent material. In some embodiments, the second sealant 70 can be made of a thermosetting material. In some embodiments, the second sealant 70 can be made of a photocurable material.

Please refer to Fig. 5, in some embodiments, the liquid crystal display assembly 10 can further include another polarizing plate 60a. The another polarizing plate 60a is disposed on an outer side of the array substrate 20.

The present disclosure further provides a method of fabricating the liquid crystal display assembly 10, including steps of:
providing an array substrate;
disposing a liquid crystal layer on the array substrate;
disposing a first sealant around the liquid crystal layer;
providing a color filter substrate covering the liquid crystal layer and the first sealant;
providing a polarizing plate disposed on the color filter substrate; and
disposing a second sealant around the polarizing plate.

In some embodiments, the first sealant 40 can be made of a transparent material. In some embodiments, the first sealant 40 can be made of a thermosetting material. In some embodiments, the first sealant 40 can be made of a photocurable material.

In some embodiments, the second sealant 70 can be made of a transparent material. In some embodiments, the second sealant 70 can be made of a thermosetting material. In some embodiments, the second sealant 70 can be made of a photocurable material.

In some embodiments, the second sealant 70 can surround the first sealant 40, the color filter substrate 30, and the polarizing plate 60. A height H of the second sealant 70 is equal to a sum of a thickness D1 of the first sealant 40, a thickness D2 of the color filter substrate 30, and a thickness D3 of the polarizing plate 60.

In some embodiments, the liquid crystal display assembly 10 can further include another polarizing plate 60a. The another polarizing plate 60a is disposed on an outer side of the array substrate 20.

In the liquid crystal display assembly 10 provided by the present disclosure, by disposing the second sealant 70 surrounding the first sealant 40, the color filter substrate 30, and the polarizing plate 60, and by fitting the second inner wall 70a of the second sealant 70 to the first outer wall 40b of the first sealant 40, the first surface 33 of the color filter substrate 30, and the second side surface 63 of the polarizing plate 60, the first outer wall 40b of the first sealant 40, the first surface 33 of the color filter substrate 30, and the second side surface 63 of the polarizing plate 60 are isolated from the external. Therefore, the liquid crystal display assembly 10 is protected from contamination and corrosion by reducing water vapor, dust, etc., entering the liquid crystal display assembly 10.

The liquid crystal display assembly provided by the embodiment of the present disclosure is described in details as above, this specification uses specific examples to describe the principles and the embodiment of the present disclosure, and the description of the above embodiments are used to help understanding the methods and the core ideas of the present disclosure; meanwhile, for those skilled in the art, according to the idea of the present disclosure, the specific embodiments and applications are subject to change, and in summary, the contents of the specification should not be construed as limiting the present disclosure.

## Claims

1. A liquid crystal display assembly, comprising:
an array substrate comprising a display area and a non-display area, wherein the non-display area surrounds the display area;
a color filter substrate;
a liquid crystal layer disposed between the array substrate and the color filter substrate;
a first sealant disposed between the array substrate and the color filter substrate, wherein the first sealant surrounds the liquid crystal layer;
a polarizing plate disposed on the color filter substrate; and
a second sealant surrounding the polarizing plate;
wherein the second sealant surrounds the first sealant, the color filter substrate, and the polarizing plate; and
wherein a height of the second sealant is equal to a sum of thicknesses of the first sealant, the color filter substrate, and the polarizing plate.

2. The liquid crystal display assembly according to Claim 1, wherein the polarizing plate comprises a laminated structure comprising a first substrate layer, a polarizing film layer, a second substrate layer, and a protective layer, all of which are stacked in sequence.

3. The liquid crystal display assembly according to Claim 2, wherein the polarizing plate further comprises a quantum dot layer comprising a number of quantum dots.

4. The liquid crystal display assembly according to Claim 3, wherein the quantum dot layer is disposed between the polarizing film layer and the second substrate layer.

5. The liquid crystal display assembly according to Claim 1, further comprising another polarizing plate disposed on an outer side of the array substrate.

6. A liquid crystal display assembly, comprising:
an array substrate comprising a display area and a non-display area, wherein the non-display area surrounds the display area;
a color filter substrate;
a liquid crystal layer disposed between the array substrate and the color filter substrate;
a first sealant disposed between the array substrate and the color filter substrate, wherein the first sealant surrounds the liquid crystal layer;
a polarizing plate disposed on the color filter substrate; and
a second sealant surrounding the polarizing plate.

7. The liquid crystal display assembly according to Claim 6, wherein the second sealant surrounds the first sealant, the color filter substrate, and the polarizing plate.

8. The liquid crystal display assembly according to Claim 6, wherein a height of the second sealant is equal to a sum of thicknesses of the first sealant, the color filter substrate, and the polarizing plate.

9. The liquid crystal display assembly according to Claim 6, wherein the polarizing plate comprises a laminated structure comprising a first substrate layer, a polarizing film layer, a second substrate layer, and a protective layer, all of which are stacked in sequence.

10. The liquid crystal display assembly according to Claim 9, wherein the polarizing plate further comprises a quantum dot layer comprising a number of quantum dots.

11. The liquid crystal display assembly according to Claim 10, wherein the quantum dot layer is disposed between the polarizing film layer and the second substrate layer.

12. The liquid crystal display assembly according to Claim 6, further comprising another polarizing plate disposed on an outer side of the array substrate.

13. A method of fabricating a liquid crystal display assembly according to any one of Claims 6 to 12, comprising steps of:
providing an array substrate;
disposing a liquid crystal layer on the array substrate;
disposing a first sealant around the liquid crystal layer;
providing a color filter substrate covering the liquid crystal layer and the first sealant;
providing a polarizing plate disposed on the color filter substrate; and
disposing a second sealant around the polarizing plate.

14. The method of fabricating the liquid crystal display assembly according to Claim 13, wherein the second sealant surrounds the first sealant, the color filter substrate, and the polarizing plate.

15. The method of fabricating the liquid crystal display assembly according to Claim 13, wherein a height of the second sealant is equal to a sum of thicknesses of the first sealant, the color filter substrate, and the polarizing plate.

16. The method of fabricating the liquid crystal display assembly according to Claim 13, wherein the polarizing plate comprises a laminated structure comprising a first substrate layer, a polarizing film layer, a second substrate layer, and a protective layer, all of which are stacked in sequence.

17. The method of fabricating the liquid crystal display assembly according to Claim 16, wherein the polarizing plate further comprises a quantum dot layer comprising a number of quantum dots.

18. The method of fabricating the liquid crystal display assembly according to Claim 17, wherein the quantum dot layer is disposed between the polarizing film layer and the second substrate layer.

19. The method of fabricating the liquid crystal display assembly according to Claim 13, further comprising another polarizing plate disposed on an outer side of the array substrate.
